# EUROPEAN PATENT SPECIFICATION

(11) **EP 2 599 695 B1**
(45) Date of publication and mention of the grant of the patent: **09.07.2014**
(21) Application number: 12190900.6
(22) Date of filing: 31.10.2012
(51) Int. Cl.: B62J 6/00, B62J 17/00, B62K 11/00

(54) **Saddle riding type vehicle**
Sattelfahrzeug
Véhicule de type à enfourcher

(30) Priority: 30.11.2011 JP 2011262791
(43) Date of publication of application: 05.06.2013
(73) Proprietor: Yamaha Hatsudoki Kabushiki Kaisha, Shizuoka-ken Shizuoka 438-8501 (JP)
(72) Inventor: Konno, Toshihiko, Shizuoka Shizuoka 438-8501 (JP); Aoki, Yasushi, Shizuoka Shizuoka 438-8501 (JP)
(74) Representative: Zimmermann, Tankred Klaus

(56) References cited:
- EP-A1- 1 780 104
- US-A1- 2010 246 202

## Description

### BACKGROUND

### TECHNICAL FIELD

The present invention relates to a saddle riding type vehicle, and more specifically to a saddle riding type vehicle provided with a side cover at a front part.

### DESCRIPTION OF THE BACKGROUND ART

A motorcycle is known as one of saddle riding type vehicles. Some motorcycles have a side cover. The side cover is arranged to cover a space above a footboard. The side cover is positioned on an outer side of the space above the footboard in the vehicle widthwise direction.

In a motorcycle disclosed by JP-A 63-077885U, a front cover is provided in front of a seat that can be seated by a rider. The front cover is connected with a side cover.

The motorcycle has direction indicator lamps at a front part. The direction indicator lamps are provided in such a position that the lamps can easily be visually recognized from other motorcycles or automobiles. The direction indicator lamps may be provided to protrude outwardly in the vehicle widthwise direction from the side cover so that they can be recognized easily by other motorcycles and the like.

US 2010/0246202 A1 discloses a flasher support apparatus which lets an external force applied to a lighting apparatus main body escape effectively in a flasher support structure supporting the lighting apparatus main body via a tubular lighting apparatus stay having elasticity. A flasher support structure includes a bottom wall portion disposed on a first axial end of a flasher stay, the bottom wall portion including a mounting hole of a front flasher and an insertion hole of a flasher cable and a peripheral wall portion extending from an outer edge portion of the bottom wall portion toward a vehicle body side so as to widen an opening.

EP 1 780 104 A1 discloses a winker unit having a winker lens mounted to a base plate, which is mounted to either side surface of a front cover. Since the base plate is of a type separate from the front cover, masking or the like becomes unnecessary even when painting only the surrounding portion of the winker lens in a different painting color in order to enhance the visibility or the like. A substantially recess-like mounting portion is formed in the front cover that is integrally formed, and by mounting the base plate so as to be received in the mounting portion, a surface that is substantially integral with the front cover is formed. A plurality of bosses each having a screw hole for fixing and supporting the base plate onto the mounting portion are provided on the back side of the base plate, with a dowel for determining the mounting position of the base plate being provided near a boss located toward the front of the body.

### SUMMARY

It is an object of the present invention to provide a motorcycle that has a direction indicator lamp at a side cover arranged at a side of a front part of the motorcycle, so that the direction indicator lamp is more easily visually recognized from other motorcycles and the like and the vehicle width is reduced.

This object is achieved by a saddle riding type vehicle according to claim 1.

It has been found out that providing direction indicator lamps at a side cover in a motorcycle having the side cover at its front part expands the vehicle width and therefore the distance between the motorcycle and other motorcycles must be kept large when they pass each other. In addition, a larger parking space should be necessary for such a motorcycle.

The saddle riding type vehicle includes a vehicle body frame, a vehicle body cover, and a direction indicator lamp. The vehicle body frame has a head pipe and a front frame that extends backward and obliquely downward from the head pipe. The vehicle body cover covers the vehicle body frame. The direction indicator lamp is provided at a front part of the vehicle body cover. The vehicle body cover has a front cover and a side cover. The front cover covers a front part of the head pipe. The side cover covers a vehicle widthwise outer side of a front part of the vehicle body frame and includes a first side cover having a front part connected to the front cover and a second side cover provided adjacent to the first side cover when viewed from the outer side in a vehicle widthwise direction. A second side surface of the second side cover facing the outer side in the vehicle widthwise direction is provided to be recessed from a first side surface of the first side cover facing the outer side in the vehicle widthwise direction to an inner side in the vehicle widthwise direction. The second side surface has an opening. A part of the direction indicator lamp protrudes outwardly in the vehicle widthwise direction from the opening.

The direction indicator lamp protrudes outwardly in the vehicle widthwise direction from the second side surface positioned more on the inner side in the vehicle widthwise direction than the first side surface of the side cover. Therefore, the width of the vehicle can be smaller than that in the arrangement in which the side cover has only one side surface. In addition, the direction indicator lamp protrudes outwardly in the vehicle widthwise direction from the side cover, and therefore the direction indicator lamp can be visually more recognizable from other motorcycles and the like.

### BRIEF DESCRIPTION OF THE DRAWINGS

Fig. 1 is a left side view of an overall structure of a motorcycle according to an embodiment of the present invention.
Fig. 2 is a front view of the motorcycle.
Fig. 3 is a view showing parts of a front side cover on the left side.
Fig. 4 is a partly enlarged view of components of the front side cover on the left side.
Fig. 5 is a partly enlarged view of the front side cover in the state shown in Fig. 4 as viewed from the rear side.
Fig. 6 is a partly enlarged view showing a part of a rear surface of the front side cover on the left side.

### DESCRIPTION OF THE EMBODIMENTS

Now, a motorcycle 1 according to an embodiment of the present invention will be described in conjunction with the accompanying drawings. In the drawings, the same or corresponding portions are designated by the same reference characters and their description will not be repeated.

### Overall Structure

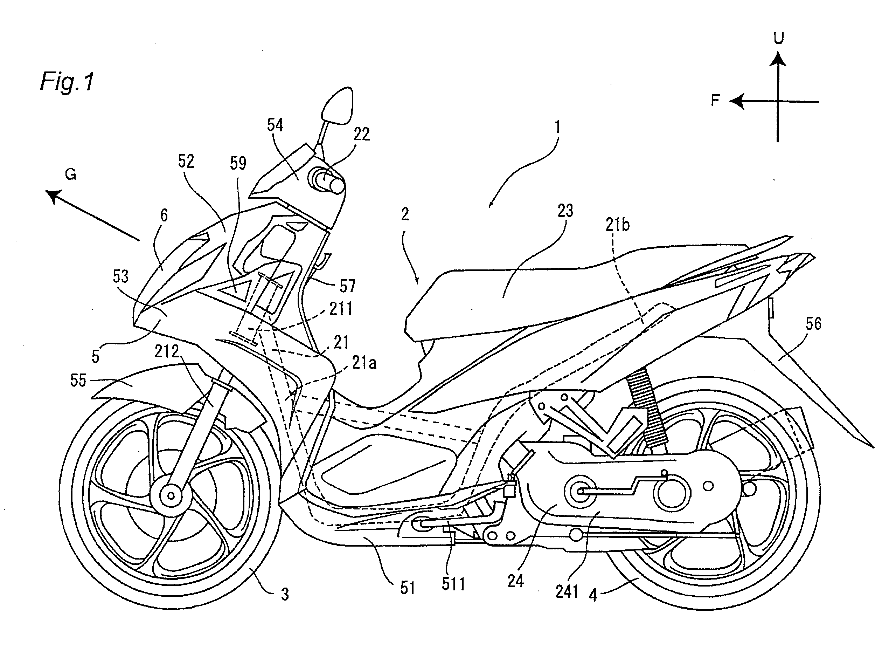

Fig. 1 is a left side view of the entire motorcycle 1 according to the present invention. Note that the front, rear, left, and right in the following description refer to these directions as viewed from a rider seated on the seat 23 of the motorcycle 1. In the following, the arrow F in Fig. 1 indicates the forward direction of the motorcycle 1 and the arrow U indicates the upward direction of the motorcycle 1.

The motorcycle 1 includes a vehicle main body 2, a front wheel 3 provided at a front part of the motorcycle 1 and a rear wheel 4 provided at a rear part of the motorcycle 1.

The vehicle main body 2 mainly includes a vehicle body frame 21, a vehicle body cover 5, a headlight 6, a handle 22, the seat 23, and a power unit 24.

The vehicle body frame 21 has a front frame 21a and a rear frame 21b. The front frame 21a is provided at a front part of the motorcycle 1. The rear frame 21b is positioned behind the front frame 21a. The vehicle body frame 21 supports the power unit 24, the seat 23, and the like. The power unit 24 includes the engine, a mission device, and the like. In Fig. 1, the vehicle body frame 21 is indicated by a broken line.

The vehicle body frame 21 has a head pipe 211. A front end of the front frame 21a is attached to the head pipe 211. The front frame 21a extends backward and obliquely downward from the head pipe 211. A steering shaft is inserted rotatably in the head pipe 211. The handle 22 is attached to an upper end of the steering shaft. A bracket is attached at a lower end of the steering shaft. Front forks 212 are attached to the left and right ends of the bracket through a bracket. The front wheel 3 is attached rotatably at lower ends of the front forks 212. The vehicle body frame 21 is formed using a metal with high rigidity such as steel.

The vehicle body frame 21 is covered with the vehicle body cover 5. The vehicle body cover 5 is made of resin. A footboard 51 is provided under the vehicle body cover 5. The vehicle body cover 5 has a front cover 52, a rear cover 57, a side cover 53, a handle cover 54, a front fender 55, and a rear fender 56.

The footboard 51 is provided under the seat 23. The footboard 51 extends in a front-back direction. The footboard 51 is attached with a center stand 511.

The front cover 52 is positioned in front of the seat 23. The front cover 52 covers the head pipe 211 from the front. The front cover 52 is provided with the headlight 6.

The rear cover 57 is attached to the front cover 52. The rear cover 57 is provided as it is opposed to the seat 23. The rear cover 57 covers the head pipe 211 from behind.

The headlight 6 illuminates ahead of the motorcycle 1. The headlight 6 is provided above the front wheel 3.

The side cover 53 covers a side of the vehicle body frame 21. The side cover 53 is provided at a front part of the motorcycle 1. A part of the side cover 53 is provided below the front cover 52. A front part of the side cover 53 is connected to the front cover 52. A rear part of the side cover 53 is connected to the rear cover 57. The side cover 53 supports the direction indicator lamps 59.

The handle cover 54 covers a part of the handle 22. The handle cover 54 is provided above the front cover 52.

The front fender 55 is provided above the front wheel 3. The front fender 55 is provided below the front cover 52. The front fender 55 is provided to protrude ahead of the front cover 52. The rear fender 56 is provided above the rear wheel 4.

The handle 22 is provided above the front cover 52. The handle 22 extends in a left-right direction. Grips that can be held by a rider are provided on the ends of the handle 22.

The seat 23 is provided above the power unit 24. A storage space that can store a helmet or the like is provided under the seat 23.

The power unit 24 is provided in the vicinity of the rear wheel 4. A CVT case 241 included in the power unit 24 is exposed from the vehicle body cover 5.

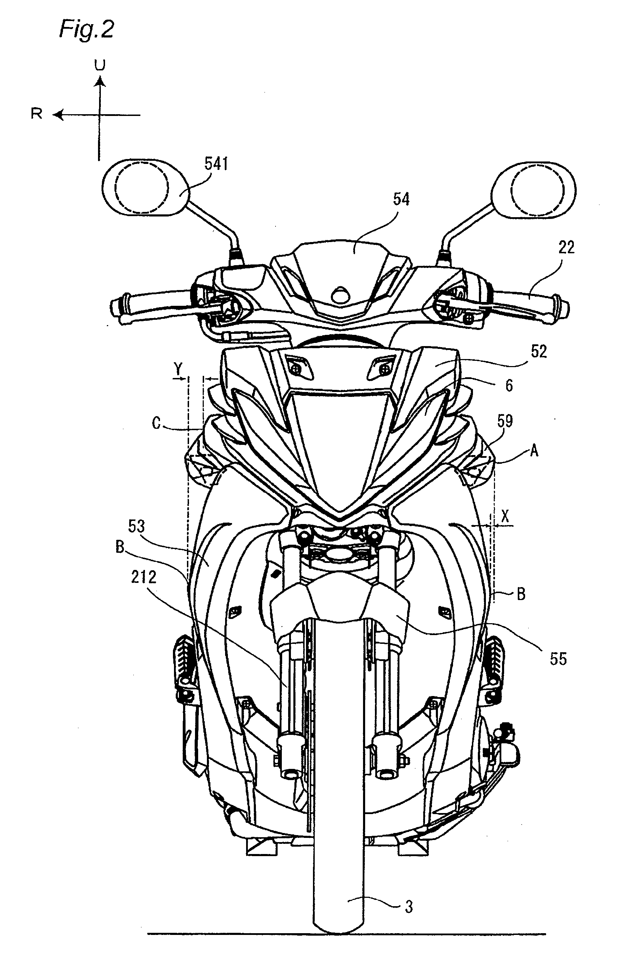

Fig. 2 is a front view of the motorcycle 1. The arrow U indicates the upward direction in Fig. 2 and the arrow R indicates the rightward direction viewed from a rider seated on the seat 23.

The front fender 55 is supported by the front forks 212 above the front wheel 3. A right side cover 53 is provided on the right side of the right front fork 212. A left side cover 53 is provided on the left side of the left front fork 212.

A front part of the side cover 53 is connected to a lower part of the front cover 52. A lower end of the side cover 53 extends below the lower ends of the front forks 212. The side cover 53 supports a direction indicator lamp 59.

The direction indicator lamp 59 protrudes outwardly in the vehicle widthwise direction from the side cover 53. The outermost point A of the direction indicator lamp 59 in the vehicle widthwise direction is positioned more on the outer side in the vehicle widthwise direction by a distance X than the outermost point B of the side cover 53 in the vehicle widthwise direction. The outermost point C of the part of the side cover that covers the direction indicator lamp 59 in the vehicle widthwise direction is positioned more on the inner side by a distance Y than the outermost point B of the side cover 53 in the vehicle widthwise direction.

The front cover 52 supports the headlight 6. A handle cover 54 and the handle 22 are provided above the front cover 52. The handle cover 54 is attached with mirrors 541.

### Structure of Side Cover

Now, the structure of the side cover 53 will be described in detail.

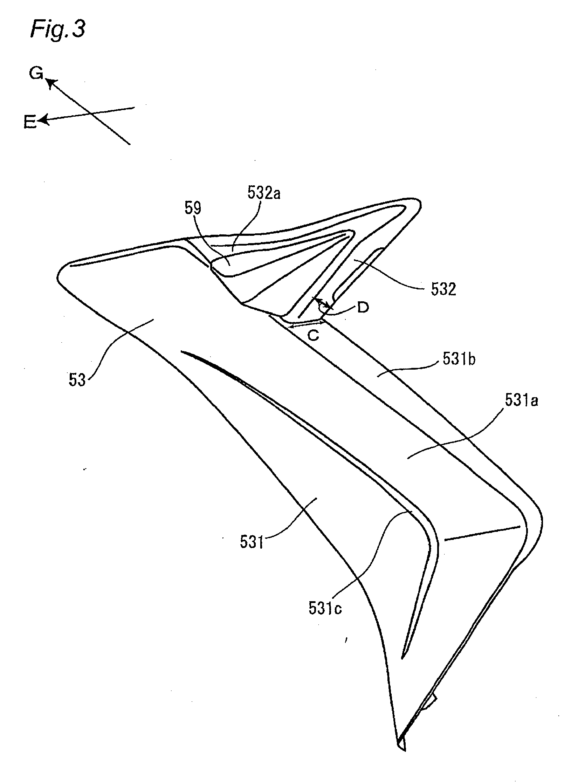

Fig. 3 is an overall view of parts showing the entire side cover 53 provided on the left side of the front fork 212. The arrow G in Fig. 3 indicates the lengthwise direction of the side cover 53. The arrow G in Fig. 3 corresponds to a forward and obliquely upward direction when the side cover 53 is attached to the motorcycle 1. The arrow G in Fig. 3 indicates a direction corresponding to the direction of the arrow G in Fig. 1 when the side cover 53 is attached to the motorcycle 1. The arrow E in Fig. 3 indicates a direction orthogonal to the first surface 531a of the side cover 53. The arrow E in Fig. 3 indicates a direction corresponding to an outward direction in the vehicle widthwise direction when the side cover 53 is attached to the motorcycle 1.

The side cover 53 provided on the right side of the right front fork 212 has a structure that is symmetric and identical to that of the side cover 53 provided on the left side of the left front fork 212, and therefore only the side cover 53 provided on the left side of the left front fork 212 will be described in detail.

The side cover 53 has first and second side covers 531 and 532. As the side cover 53 is attached to the motorcycle, the second side cover 532 is adjacent to the first side cover 531 when viewed from the outer side in the vehicle widthwise direction.

The first side cover 531 has first and second surfaces 531a and 531b. A first step 531c is formed at the first surface 531a. The second surface 531b extends in the direction of the arrow G.

The second side cover 532 is connected to the second surface 531b of the first side cover 531. The direction indicator lamp 59 is mounted on the second side cover 532. The second side cover 532 protrudes from the second surface 531b of the first side cover 531. The second side cover 532 protrudes in a direction approximately orthogonal to the second surface 531b. The second side cover 532 protrudes upward as the side cover 53 is mounted on the motorcycle 1. The second side cover 532 is provided at a front end of the second surface 531b with respect to the G direction. The second side cover 532 has a support surface 532a. The support surface 532a supports the direction indicator lamp 59. In the direction of the arrow E (the leftward in the vehicle widthwise direction from the center of the vehicle body), the width C of the first side cover 531 of the part where the second side cover 532 is provided (see Fig. 3) is smaller than the width D of the second surface 531b (see Fig. 3).

The direction indicator lamp 59 protrudes from the support surface 532a. The direction indicator lamp 59 protrudes in the direction of the arrow E. The direction indicator lamp 59 has an approximately triangular shape when viewed from the outer side in the vehicle widthwise direction as the side cover 53 is mounted on the motorcycle 1. The direction indicator lamp 59 protrudes more in the direction of the arrow E than the first surface 531a of the first side cover 531. More specifically, the direction indicator lamp 59 protrudes more on the outer side in the vehicle widthwise direction than the first surface 531a as the side cover 53 is mounted on the motorcycle 1. A part of the direction indicator lamp 59 is positioned above the first side cover 531 as it is attached to the motorcycle 1.

In the following, the structure of the second side cover 532 and the first side cover 531 will be described in detail.

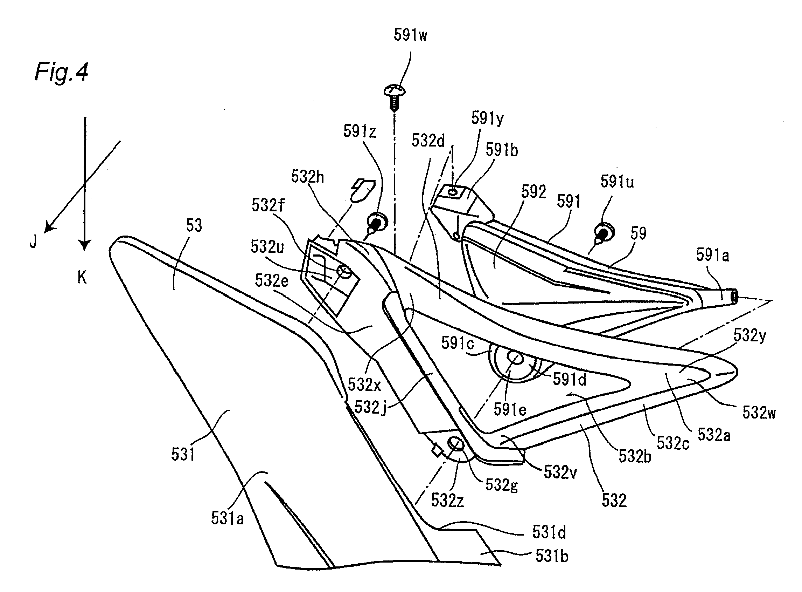

Fig. 4 is an assembly diagram of members for the first and second side covers 531 and 532. The direction indicated by the arrow J in Fig. 4 is orthogonal to the first surface 531a of the side cover 53 and screws 591u and 591z are inserted into the side cover 531 in this direction when the second side cover 532 and the direction indicator lamp 59 are attached to the side cover 531. The direction indicated by the arrow J corresponds to the outward direction in the vehicle widthwise direction as the side cover 53 is mounted on the motorcycle 1. The direction indicated by the arrow K in Fig. 4 corresponds to the direction in which a screw 591w is inserted into the second side cover 532 when the direction indicator lamp 59 is attached to the second side cover 532. The direction of the arrow K corresponds to an approximately downward direction as the side cover 53 is mounted on the motorcycle 1.

The second surface 531b of the first side cover 531 is provided with a mount portion 531d. The mount portion 531d is a part of a vehicle widthwise end recessed in the direction of the arrow J. A part of the second side cover 532 is provided at the mount portion 531d.

The second side cover 532 has a triangular opening 532b at the support surface 532a. The second side cover 532 has a first plate type support 532c, a second plate type support 532d, and an attachment portion 532e.

The opening 532b is surrounded by the first plate type support 532c, the second plate type support 532d, and the attachment portion 532e. The first plate type support 532c extends in a direction approximately orthogonal to the second surface 531b of the first side cover 531. The first plate type support 532c has first and second ends 532v and 532w. The first end 532v is connected to the attachment portion 532e. The second end 532w is connected to the second plate type support 532d.

The second plate type support 532d has third and fourth ends 532x and 532y. The third end 532x is connected to the attachment portion 532e. The fourth end 532y is connected to the first plate type support 532c.

The attachment portion 532e is attached to the first side cover 531. The attachment portion 532e has a fifth end 532u and a sixth end 532z. The fifth end 532u has a first through hole 532f. When the second side cover 532 is attached to the first side cover 531, the first attachment screw 591z is inserted into the first through hole 532f. A second through hole 532g is formed at the sixth end 532z. A second step 532h is provided at the connection portion between the attachment portion 532e and the second plate type support 532d. The attachment portion 532e has a protrusion plate 532j that protrudes in the direction of the arrow J. The protrusion plate 532j is provided along the edge of the opening 532b. An end of the protrusion plate 532j is adjacent to the second step 532h. When the second side cover 532 is attached to the first side cover 531, the protrusion plate 532j is in contact with a rear surface of the second surface 531b of the first side cover 531.

The direction indicator lamp 59 includes a support board 591 and a lens 592. The direction indicator lamp 59 is attached at the second side cover 532 by the second attachment screw 591w. The direction indicator lamp 59 is attached to the second side covers 531 and 532 by the third attachment screw 591u.

The support board 591 supports the lens 592 from the rear side. The support board 591 is a plate type member in an approximately triangular shape. The support board 591 has a first supported portion 591a, a second supported portion 591b, and an attachment plate 591c.

The first supported portion 591a is provided at one of the apexes of the support board 591. The first supported portion 591a is a columnar portion. The first supported portion 591a extends from the second supported portion 591b toward the first supported portion 591a.

The second supported portion 591b is provided at one of the apexes of the support board 591. The second supported portion 591b has a recess 591y. The recess 591y is depressed in the direction of the arrow K. The recess 591y has a screw groove on the inner circumferential side. When the second side cover 532 is attached to the first side cover 531, the second attachment screw 591w is inserted into the recess 591y.

The attachment plate 591c has a circular, third through hole 591d. An elastic member 591e is provided on the inner circumferential side of the third through hole 591d. The elastic member 591e is an annular member. When the direction indicator lamp 59 is attached to the first and second side covers 531 and 532, the third attachment screw 591u is inserted into the third through hole 591d.

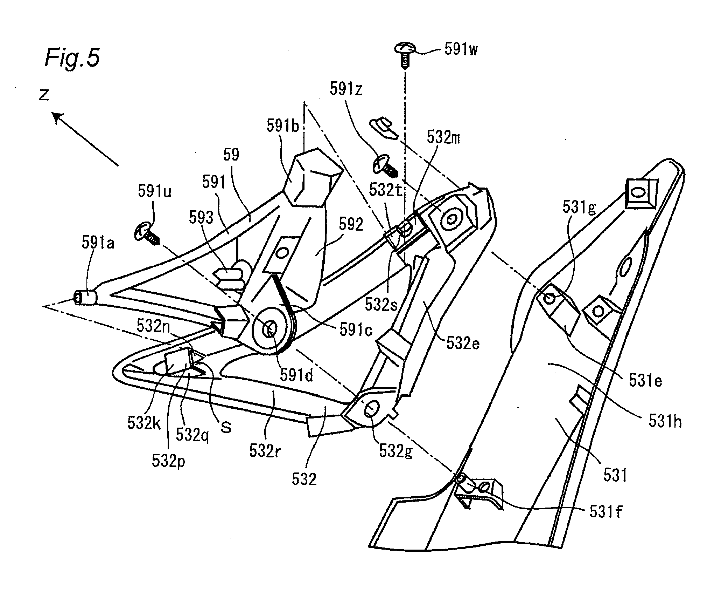

Fig. 5 is an assembly diagram showing a rear surface of the members in Fig. 4. The arrow Z in Fig. 5 indicates the direction from the first side cover 531 to the attachment plate 591c. The direction of the arrow Z corresponds to the direction from the outer side to the center in the vehicle widthwise direction when side cover 53 is attached to the motorcycle 1.

First and second projections 531e and 531f are formed at a rear surface 531h of the first side cover 531. The first projection 531e projects from the rear surface 531h of the first surface 531a. The first projection 531e projects in the direction of the arrow Z. A depression 531g is formed at the first projection 531e. There is a screw groove formed on the inner circumferential side of depression 531g. The second projection 531f projects from the rear surface 531h of the first surface 531a. The second projection 531f projects in the direction of the arrow Z. The second projection 531f is a cylindrical portion. A screw groove is formed on the inner circumferential side of the second projection 531f.

First and second supports 532k and 532m are provided at the rear surface 532r of the second side cover 532.

The first support 532k is a part that can support the first supported portion 591a. The first support 532k has a first plate 532n, a second plate 532p, and a third plate 532q. The first plate 532n extends in the direction of the arrow Z from the rear surface 532r of the second side cover 532. The second plate 532p is provided opposed to the rear surface 532r of the second side cover 532. The second plate 532p is connected to an end of the first plate 532n. The third plate 532q is provided opposed to the first plate 532n. The third plate 532q extends in the direction of the arrow Z. The third plate 532q is connected to an end of the second plate 532p. A space S is surrounded by the first plate 532n, the second plate 532p, the third plate 532q, and the rear surface 532r of the second side cover 532. When the direction indicator lamp 59 is attached to the second side cover 532, the first supported portion 591a is inserted in the space S.

The second support 532m supports the second supported portion 591b. The second support 532m has a contact plate 532t. The contact plate 532t is in contact with the second supported portion 591b. The contact plate 532t has a notch 532s. The notch 532s has a width that allows the screw head of the second attachment screw 591w to pass.

The direction indicator lamp 59 has another bulb 593. The bulb 593 is supported at the support board 591. A part of the bulb 593 is provided in a space surrounded by the support board 591 and the lens 592.

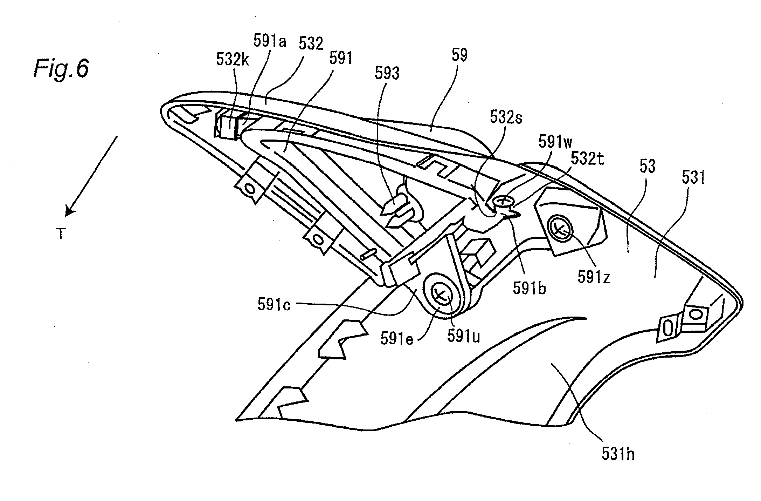

Fig. 6 shows how the first side cover 531 is provided with the second side cover 532. The direction of the arrow T in Fig. 6 indicates the direction from the first side cover 531 to the attachment plate 591c. The arrow T indicates the direction from the outer side to the center in the vehicle widthwise direction when the side cover 53 is mounted on the motorcycle 1.

The first supported portion 591a is supported by the first support 532k. Here, the first supported portion 591a is columnar and therefore can rotate around the central axis.

The second attachment screw 591w has its tip end inserted into the recess 591y of the second supported portion 591b through the notch 532s. The second supported portion 591b is in contact with the contact plate 532t. The contact plate 532t is held between the head of the second attachment screw 591w and the second supported portion 591b. Therefore, if the direction indicator lamp 59 is pushed in the direction of the arrow T with weak force, the second supported portion 591b does not move.

The third attachment screw 591u is engaged with the screw groove of the second projection 531f through the third through hole 591d of the attachment portion 591c.

Attaching Operation and Operation when Direction Indicator Lamp is Strongly Pushed toward Center from Outer Side in Vehicle Widthwise Direction

The operation of fixing the direction indicator lamp 59, the first side cover 531, and the second side cover 532 will be described.

Referring to Fig. 5, the first supported portion 591a is inserted into the space S. The second supported portion 591b is supported by the second support 532m. At the time, the second supported portion 591b is positioned in a location in contact with the contact plate 532t. The notch 532s and the recess 591y of the second supported portion 591b are provided coaxially. The second attachment screw 591w is screwed into the recess 591y through the notch 532s. The third through hole 591d of the attachment plate 591c, the second through hole 532g, and the second projection 531f are provided coaxially. The third attachment screw 591u is screwed in the screw groove of the second projection 531f through the third through hole 591d and the second through hole 532g.

As in the foregoing, the direction indicator lamp 59 and the first and second side covers 531 and 532 are fixed.

Now, the operation when the direction indicator lamp 59 is pushed with strong force from the outer side to the inner side in the vehicle widthwise direction will be described.

When the direction indicator lamp 59 is pushed from the outer side to the inner side in the vehicle widthwise direction, the second supported portion 591b moves in the direction of the arrow Z in Fig. 5. The second supported portion 591b is then no longer supported by the second support 532m. The attachment plate 591c moves in the direction of the arrow Z. When the attachment plate 591c moves in the direction of the arrow Z, the elastic member 591e elastically deforms, so that the head of the third attachment screw 591u passes through the third through hole 591d. The attachment plate 591c is apart from the second side cover 532.

In this way, the second supported portion 591b and the attachment plate 591c are apart from the second and first side covers 532 and 531.

### Features of the Embodiment

Now, features of the embodiment will be described.

According to the above-described embodiment, the direction indicator lamp 59 protrudes to the outer side from the second side cover 532 in the vehicle widthwise direction and is therefore easily visually recognized from other motorcycles and the like.

The support surface 532a of the second side cover 532 is positioned more on the inner side in the vehicle widthwise direction than the first surface 531a of the first side cover 531, so that the vehicle width can be smaller than the case of providing the direction indicator lamp 59 at the first surface 531a of the first side cover 531 or the case of providing the support surface 532a and the first surface 531a in the same position in the vehicle widthwise direction.

In addition, if for example the motorcycle 1 turns over and the direction indicator lamp 59 is pushed with strong force from the outer side to the inner side in the vehicle widthwise direction, the attachment plate 591c and the second supported portion 591b move in the direction of the arrow Z in Fig. 5, so that the strong pushing force can be relieved without damaging the direction indicator lamp 59.

Since the first and second side covers 531 and 532 are discrete members, they can easily be painted in different colors. Therefore, the motorcycle 1 may be improved readily as for its appearance.

### Other Embodiments

In the foregoing, the motorcycle according to the embodiment has been described but the invention is also applicable for example to a three-wheeled or four-wheeled saddle riding type vehicle.

According to the above-described embodiment, the first and second side covers 531 and 532 are discrete members but they may be formed integrally according to the invention. In this case, a part where the direction indicator lamp 59 is attached corresponds to a second side cover according to the present invention and a second side surface according to the present invention corresponds to a surface surrounding the direction indicator lamp 59. A part provided with the first side surface positioned more on the outer side than the second side surface in the vehicle widthwise direction corresponds to a first side cover according to the present invention. When the first and second side covers 531 and 532 are painted in different colors, the side covers may be made of discrete members as in the above-described embodiment, so that they can be painted more easily.

According to the above-described embodiment, when the direction indicator lamp 59 is pushed from the outer side to the inner side in the vehicle widthwise direction, a part of the direction indicator lamp 59 can move to the inner side in the vehicle widthwise direction, but the invention is not limited to this arrangement and the direction indicator lamp 59 may be fixed to the second side cover 532.

According to the above-described embodiment, the outermost part of the direction indicator lamp 59 in the vehicle widthwise direction is positioned more on the outer side in the vehicle widthwise direction than the outermost part of the first side cover 531 in the vehicle widthwise direction. The present invention is however not limited to the arrangement and the vehicle widthwise outermost part of the direction indicator lamp 59 may be positioned more on the inner side in the vehicle widthwise direction than the vehicle widthwise outermost part of the first side cover 531. In this case, the direction indicator lamp 59 may be visually less recognizable from other motorcycles or the like, but the vehicle width can be smaller than that according to the above-described embodiment.

## Claims

1. A saddle riding type vehicle, comprising:
a vehicle body frame (21) having a head pipe (211);
a vehicle body cover (5) that covers the vehicle body frame (21); and
a direction indicator lamp (59) provided at a front part of the vehicle body cover (5),
the vehicle body cover (5) having a front cover (52) and a side cover (53),
the front cover (52) covering a front part of the head pipe (211),
the side cover (53) including a first side cover (531) having a front part connected to the front cover (52) and a second side cover (532) provided adjacent to the first side cover (531) when viewed from an outer side in a vehicle widthwise direction,
the side cover (53) covering an outer side of the head pipe (211) in the vehicle widthwise direction,
a second side surface (532a) of the second side cover (532) facing the outer side in the vehicle widthwise direction being provided to be recessed from a first side surface (531a) of the first side cover (531) facing the outer side in the vehicle widthwise direction to an inner side in the vehicle widthwise direction,
the second side surface (532a) having an opening (532b),
a part of the direction indicator lamp (59) protruding outwardly in the vehicle widthwise direction from the opening (532b),
wherein the first side cover (531) has a first attachment portion positioned at a surface on the inner side in the vehicle widthwise direction, and
the second side cover (532) has a second attachment portion (532e) opposed to the first attachment portion,
the saddle riding type vehicle further comprising a plurality of fixing members that fix the first attachment portion and the second attachment portion (532e).

2. The saddle riding type vehicle according to claim 1, wherein the direction indicator lamp (59) protrudes more to the outer side in the vehicle widthwise direction than the first side surface (531a).

3. The saddle riding type vehicle according to claim 1, wherein the direction indicator lamp (59) has a plurality of supported portions (591a, 591b) opposed to a surface of the second side cover (532) on the inner side in the vehicle widthwise direction, and
the second side cover (532) has a plurality of base supports that support the supported portions (591a, 591b) at a surface on the inner side in the vehicle widthwise direction.

4. The saddle riding type vehicle according to claim 3, wherein the direction indicator lamp (59) has a light emitter and a base member that supports the light emitter,
the base member is provided on the inner side of the second side cover (532) in the vehicle widthwise direction and has the plurality of supported portions (591a, 591b),
a support hole that extends in the vehicle widthwise direction is provided at at least one of the supported portions (591a, 591b) of the base members,
an annular member is provided on an inner circumferential side of the support hole,
the annular member is formed of an elastic member,
the fixing member has a screw,
one of the supported portions has a through hole opposed to the support hole, and
the direction indictor lamp (59) and the second side cover (532) are fixed by the fixing member passed through the support hole and the through hole.

5. The saddle riding type vehicle according to any one of claims 1 to 4, wherein a part of the direction indicator lamp (59) is positioned above the first side cover (531) in the vertical direction.

6. The saddle riding type vehicle according to any one of claims 1 to 5, wherein the first side cover (531) has an upper surface connected to an upper part of the first side surface (531a) and extending in the vehicle widthwise direction,
a mount portion used to mount the second side cover (532) is provided at the upper surface, and
the second side cover (532) projects from the upper surface.

7. The saddle riding type vehicle according to claim 6, wherein a width of the second side cover (532) in the vehicle widthwise direction is smaller than a width of the upper surface of the first side cover (531) in the vehicle widthwise direction.

8. The saddle riding type vehicle according to any one of claim 1 to 7, wherein the vehicle body cover (5) has a rear cover attached to the front cover (52),
the rear cover covers the head pipe (211) from behind, and
the first side cover (531) is connected to the front cover (52) and the rear cover.

## Patentansprüche

1. Ein Sattel-Typ-Fahrzeug, das folgende Merkmale aufweist:
einen Fahrzeugkörperrahmen (21) mit einem Kopfrohr (211);
eine Fahrzeugkörperabdeckung (5), die den Fahrzeugkörperrahmen (21) abdeckt; und
eine Richtungsindikatorlampe (59), die an einem vorderen Teil der Fahrzeugkörperabdeckung (5) vorgesehen ist,
wobei die Fahrzeugkörperabdeckung (5) eine Frontabdeckung (52) und eine Seitenabdeckung (53) aufweist,
die Frontabdeckung (52) einen vorderen Teil des Kopfrohrs (211) abdeckt,
die Seitenabdeckung (53) eine erste Seitenabdeckung (531) mit einem vorderen Teil, der mit der Frontabdeckung (52) verbunden ist, und eine zweite Seitenabdeckung (532) umfasst, die bei Betrachtung von einer äußeren Seite in einer Fahrzeugbreitenrichtung benachbart zu der ersten Seitenabdeckung (531) vorgesehen ist,
die Seitenabdeckung (53) eine äußere Seite des Kopfrohrs (211) in der Fahrzeugbreitenrichtung abdeckt,
eine zweite Seitenoberfläche (532a) der zweiten Seitenabdeckung (532), die der äußeren Seite in der Fahrzeugbreitenrichtung zugewandt ist, so vorgesehen ist, dass sie von einer ersten Seitenoberfläche (531a) der ersten Seitenabdeckung (531), die in der Fahrzeugbreitenrichtung der äußeren Seite zugewandt ist, zu einer Innenseite in der Fahrzeugbreitenrichtung zurückgesetzt ist,
die zweite Seitenoberfläche (532a) eine Öffnung (532b) aufweist,
ein Teil der Richtungsindikatorlampe (59) in der Fahrzeugbreitenrichtung von der Öffnung (532b) nach außen vorsteht,
wobei die erste Seitenabdeckung (531) einen ersten Befestigungsabschnitt aufweist, der in der Fahrzeugbreitenrichtung an einer Oberfläche auf der Innenseite positioniert ist, und
die zweite Seitenabdeckung (532) einen zweiten Befestigungsabschnitt (532e) aufweist, der gegenüber von dem ersten Befestigungsabschnitt liegt,
wobei das Sattel-Typ-Fahrzeug ferner eine Mehrzahl von Fixierungsbauteilen aufweist, die den ersten Befestigungsabschnitt und den zweiten Befestigungsabschnitt (532e) fixieren.

2. Das Sattel-Typ-Fahrzeug gemäß Anspruch 1, bei dem die Richtungsindikatorlampe (59) in der Fahrzeugbreitenrichtung weiter zu der äußeren Seite vorsteht als die erste Seitenoberfläche (531 a).

3. Das Sattel-Typ-Fahrzeug gemäß Anspruch 1, bei dem die Richtungsindikatorlampe (59) eine Mehrzahl gestützter Abschnitte (591 a, 591 b) aufweist, die in der Fahrzeugbreitenrichtung gegenüber von einer Oberfläche der zweiten Seitenabdeckung (532) auf der Innenseite liegen, und
die zweite Seitenabdeckung (532) eine Mehrzahl von Basisstützen aufweist, die die gestützten Abschnitte (591 a, 591 b) in der Fahrzeugbreitenrichtung an einer Oberfläche auf der Innenseite stützen.

4. Das Sattel-Typ-Fahrzeug gemäß Anspruch 3, bei dem die Richtungsindikatorlampe (59) einen Lichtemitter und ein Basisbauteil, das den Lichtemitter stützt, aufweist,
das Basisbauteil auf der Innenseite der zweiten Seitenabdeckung (532) in der Fahrzeugbreitenrichtung vorgesehen ist und die Mehrzahl gestützter Abschnitte (591 a, 591 b) aufweist,
ein Stützloch, das sich in der Fahrzeugbreitenrichtung erstreckt, an zumindest einem der gestützten Abschnitte (591 a, 591 b) der Basisbauteile vorgesehen ist,
ein ringförmiges Bauteil auf einer Innenumfangsseite des Stützlochs vorgesehen ist,
das ringförmige Bauteil aus einem elastischen Bauteil gebildet ist,
das Fixierungsbauteil eine Schraube aufweist,
einer der gestützten Abschnitte ein Durchgangsloch aufweist, das gegenüber von dem Stützloch liegt, und
die Richtungsindikatorlampe (59) und die zweite Seitenabdeckung (532) durch das Fixierungsbauteil fixiert werden, das durch das Stützloch und das Durchgangsloch verläuft.

5. Das Sattel-Typ-Fahrzeug gemäß einem der Ansprüche 1 bis 4, bei dem ein Teil der Richtungsindikatorlampe (59) in der Vertikalrichtung oberhalb der ersten Seitenabdeckung (531) positioniert ist.

6. Das Sattel-Typ-Fahrzeug gemäß einem der Ansprüche 1 bis 5, bei dem die erste Seitenabdeckung (531) eine obere Oberfläche aufweist, die mit einem oberen Teil der ersten Seitenoberfläche (531 a) verbunden ist und sich in der Fahrzeugbreitenrichtung erstreckt,
ein Anbringungsabschnitt, der zum Anbringen der zweiten Seitenabdeckung (532) verwendet wird, an der oberen Oberfläche vorgesehen ist, und
die zweite Seitenabdeckung (532) von der oberen Oberfläche vorsteht.

7. Das Sattel-Typ-Fahrzeug gemäß Anspruch 6, bei dem eine Breite der zweiten Seitenabdeckung (532) in der Fahrzeugbreitenrichtung kleiner ist als eine Breite der oberen Oberfläche der ersten Seitenabdeckung (531) in der Fahrzeugbreitenrichtung.

8. Das Sattel-Typ-Fahrzeug gemäß einem der Ansprüche 1 bis 7, bei dem die Fahrzeugkörperabdeckung (5) eine Rückabdeckung aufweist, die an der Frontabdeckung (52) befestigt ist,
die Rückabdeckung das Kopfrohr (211) von hinten abdeckt, und
die erste Seitenabdeckung (531) mit der Frontabdeckung (52) und der Rückabdeckung verbunden ist.

## Revendications

1. Véhicule de type à enfourcher, comprenant:
un châssis de carrosserie de véhicule (21) présentant un tube de tête (211);
un couvercle de carrosserie de véhicule (5) qui recouvre le châssis de carrosserie de véhicule (21); et
un feu indicateur de direction (59) prévu dans une partie avant du couvercle de carrosserie de véhicule (5),
le couvercle de carrosserie de véhicule (5) présentant un couvercle avant (52) et un couvercle latéral (53),
le couvercle avant (52) recouvrant une partie avant du tube de tête (211),
le couvercle latéral (53) comportant un premier couvercle latéral (531) présentant une partie avant connectée au couvercle avant (52) et un deuxième couvercle latéral (532) prévu adjacent au premier couvercle latéral (531) lorsque vu d'un côté extérieur dans le sens de la largeur du véhicule,
le couvercle latéral (53) recouvrant un côté extérieur du tube de tête (211) dans le sens de la largeur du véhicule,
une deuxième surface latérale (532a) du deuxième couvercle latéral (532) faisant face au côté extérieur dans le sens de la largeur du véhicule étant prévue de manière à être en retrait par rapport à une première surface latérale (531a) du premier couvercle latéral (531) faisant face au côté extérieur dans le sens de la largeur du véhicule vers un côté intérieur dans le sens de la largeur du véhicule,
la deuxième surface latérale (532a) présentant une ouverture (532b),
une partie du feu indicateur de direction (59) ressortant vers l'extérieur, dans le sens de la largeur du véhicule, de l'ouverture (532b),
dans lequel le premier couvercle latéral (531) présente une première partie de fixation positionnée sur une surface du côté intérieur dans le sens de la largeur du véhicule, et
le deuxième couvercle latéral (532) présente une deuxième partie de fixation (532e) opposée à la première partie de fixation,
le véhicule de type à enfourcher comprenant par ailleurs une pluralité d'éléments de fixation qui fixent la première partie de fixation et la deuxième partie de fixation (532e).

2. Véhicule de type à enfourcher selon la revendication 1, dans lequel le feu indicateur de direction (59) ressort plus vers le côté extérieur dans le sens de la largeur du véhicule que la première surface latérale (531a).

3. Véhicule de type à enfourcher selon la revendication 1, dans lequel le feu indicateur de direction (59) présente une pluralité de parties supportées (591a, 591b) opposées à une surface du deuxième couvercle latéral (532) du côté intérieur dans le sens de la largeur du véhicule, et
le deuxième couvercle latéral (532) présente une pluralité de supports de base qui supportent les parties supportées (591a, 591b) sur une surface du côté intérieur dans le sens de la largeur du véhicule.

4. Véhicule de type à enfourcher selon la revendication 3, dans lequel le feu indicateur de direction (59) présente un émetteur de lumière et un élément de base qui supporte l'émetteur de lumière,
l'élément de base est prévu du côté intérieur du deuxième couvercle latéral (532) dans le sens de la largeur du véhicule et présente la pluralité de parties supportées (591a, 591b),
un trou de support qui s'étend dans le sens de la largeur du véhicule est prévu dans au moins l'une des parties supportées (591a, 591b) des éléments de base,
un élément annulaire est prévu d'un côté circonférentiel intérieur du trou de support,
l'élément annulaire est formé à partir d'un élément élastique, l'élément de fixation présente une vis,
l'une des parties supportées présente un trou traversant opposé au trou de support, et
le feu indicateur de direction (59) et le deuxième couvercle latéral (532) sont fixés par l'élément de fixation passé à travers le trou de support et le trou traversant.

5. Véhicule de type à enfourcher selon l'une quelconque des revendications 1 à 4, dans lequel une partie du feu indicateur de direction (59) est positionnée au-dessus du premier couvercle latéral (531) dans le sens vertical.

6. Véhicule de type à enfourcher selon l'une quelconque des revendications 1 à 5, dans lequel le premier couvercle latéral (531) présente une surface supérieure connectée à une partie supérieure de la première surface latérale (531a) et s'étendant dans le sens de la largeur du véhicule,
une partie de montage utilisée pour monter le deuxième couvercle latéral (532) est prévue sur la surface supérieure, et
le deuxième couvercle latéral (532) ressort de la surface supérieure.

7. Véhicule de type à enfourcher selon la revendication 6, dans lequel une largeur du deuxième couvercle latéral (532) dans le sens de la largeur du véhicule est plus petite qu'une largeur de la surface supérieure du premier couvercle latéral (531) dans le sens de la largeur du véhicule.

8. Véhicule de type à enfourcher selon l'une quelconque des revendications 1 à 7, dans lequel le couvercle de carrosserie de véhicule (5) présente un couvercle arrière fixé au couvercle avant (52),
le couvercle arrière recouvre le tube de tête (211) de l'arrière, et
le premier couvercle latéral (531) est connecté au couvercle avant (52) et au couvercle arrière.
